# EUROPÄISCHE PATENTSCHRIFT

(11) **EP 0 832 542 B1**
(45) Veröffentlichungstag und Bekanntmachung des Hinweises auf die Patenterteilung: **26.09.2001**
(21) Anmeldenummer: 96916012.6
(22) Anmeldetag: 08.06.1996
(51) Int. Cl.: H04Q 11/04, H04L 29/06

(54) **VERFAHREN UND VORRICHTUNG ZUR AUTHENTISIERUNG VON TEILNEHMERN GEGENÜBER DIGITALEN VERMITTLUNGSSTELLEN**
PROCESS AND DEVICE FOR AUTHENTICATING SUBSCRIBERS TO DIGITAL EXCHANGES
PROCEDE ET DISPOSITIF D'AUTHENTIFICATION D'ABONNES AUPRES DE CENTRES DE COMMUTATION NUMERIQUES

(30) Priorität: 13.06.1995 DE 19521484
(43) Veröffentlichungstag der Anmeldung: 01.04.1998
(73) Patentinhaber: Deutsche Telekom AG, 53113 Bonn (DE)
(72) Erfinder: STOLZ, Helmut, D-57080 Siegen (DE)
(86) Internationale Anmeldenummer: DE9601061
(87) Internationale Veröffentlichungsnummer: WO9642181

(56) Entgegenhaltungen:
- TELESIS, Bd. 16, Nr. 2, 1.Januar 1989, Seiten 42-50, XP000072004 DIFFIE W ET AL: "SECURE CCM"
- INTERNATIONAL SWITCHING SYMPOSIUM 1987, 15. - 20.März 1987, PHOENIX, ARIZONA USA, Seiten 863-869, XP002017713 O'HIGGINS ET AL.: "ENCRYPTION AND ISDN - A NATURAL FIT"
- ADVANCES IN CRYPTOLOGY, SANTA BARBARA, AUG. 16 - 20, 1987, Nr. CONF. 7, 1.Januar 1987, POMERANCE C, Seiten 9-18, XP000130200 PRESTTUN K: "INTEGRATING CRYPTOGRAPHY IN ISDN"
- PROC. 12TH NAT. COMPUTER SECURITY CONF., Oktober 1989, Seiten 305-319, XP002017714 GASSER ET AL.: "THE DIGITAL DISTRIBUTED SYSTEM SECURITY ARCHITECTURE"
- IEEE COMMUNICATIONS MAGAZINE, Bd. 30, Nr. 7, 1.Juli 1992, Seiten 30-35, XP000307910 FORD W ET AL: "PUBLIC-KEY CRYPTOGRAPHY AND OPEN SYSTEMS INTERCONNECTION"

## Beschreibung

Die Erfindung betrifft ein Verfahren zur Authentisierung von Teilnehmern gegenüber einer oder mehreren Vermittlungsstellen eines digitalen Kommunikationsnetzwerkes, insbesondere ein ISDN-Netz, gemäß Anspruch 1 sowie eine Vorrichtung zur Authentisierung von Teilnehmern gemäß Anspruch 7.

Es sind digitale Kommunikationsnetze bekannt, die über mehrere Teilnehmeranschlüsse und digitale Vermittlungsstellen verfügen. Da ein Teilnehmeranschluß über nicht gesicherte Verbindungswege an eine digitale Vermittlungsstelle angeschlossen wird, können Eindringlinge oder sogenannte Lauscher die Verbindungswege abhören, indem sie sich an verschiedenen Punkten in bestehende Verbindungswege einschalten bzw. auf die bestehenden Verbindungswege aufschalten. Hat sich ein Eindringling auf diese Weise erst einmal Zugang zum Vermittlungssystem verschafft, kann er, obwohl er nicht authorisiert ist, die Vermittlungsstelle auf Kosten des Anschlußinhabers benutzen.

In dem Aufsatz "SECURE CCM", erschienen in TELESIS, Bd.16, Nr. 2, 1.1.1989, S.42 bis 50, XP000072004, offenbarten Diffie et al. unter anderem eine Authentifikationsmethode, nach der sich der Empfänger einer Information von der Echtheit der Identität des Senders vergewissern kann. Allerdings beruht das bekannte Verfahren auf dem technisch sehr komplexen und daher auch kostenaufwendigen Rivest, Shamir und Adleman (RSA)-Algorithmus. Auch gibt es in dem gesamten Aufsatz keinen Hinweis darauf, die Prüfung der Echtheit der Identität des Senders auf kostengünstige Weise in der dem Sender zugeordneten Vermittlungsstelle selbst durchzuführen.

In dem Aufsatz "ENCRYPTION AND ISDN - A NATURAL FIT, erschienen in International Switching Symposium 1987, 15.-20.3.1987, Phoenix, Arizona USA, S. 863 bis 869, XP002017713, beschreiben O'Higgins et al. eine Technik zur verschlüsselten Übertragung eines von einem Sender erzeugten Klartextes über ein ISDN-Netz zu einem Empfänger. Um den Klartext gesichert zwischen den beiden Teilnehmern austauschen zu können, schlagen O'Higgins et al. vor, entweder in jeder, bei jedem Teilnehmer angeschalteten Datenendeinrichtungen ein Sicherheitsmodul oder nur in der Netzabschlußeinrichtung, an die die Datenendeinrichtungen angeschaltet sind, ein Sicherheitsmodul zu implementieren.

In dem Aufsatz "INTEGRATING CRYPTCGRAPHY IN ISDN", erschienen in Advances in Cryptology, Santa Barbara, 16.-20.8.1987, Nr. Conf. 7, 1.1.1987, Pomerance C. S.9-18, XP000130200, beschreibt K. Presttun ein Authentifikationsverfahren auf der Grundlage einer Kryptografie mit öffentlichen Schlüsseln. Dieses Verfahren benutzt einen zentralen Authentifikations-Server, der die öffentlichen Schlüssel aller Benutzer enthält. Wiederum erfolgt die Authentifizierung zwischen den kommunizierenden Teilnehmern selbst. Ein Nachteil dieses bekannten Authentifizierungsverfahrens ist darin zu sehen, daß zum einen ein zentraler Authentifikations-Server bereitgestellt und zum anderen vor der eigentlichen Authentifizierungsprozedur ein voll-ständiger Verbindungsaufbau eingeleitet werden muß, was nicht nur Kosten verursacht, sondern auch einen hohen technischen Aufwand nach sich zieht.

Der Erfindung liegt daher die Aufgabe zugrunde, einen Mißbrauch der Vermittlungsstelle durch einen nicht berechtigten Eindringling auf eine kostengünstigere und technisch leichter zu realisierende Weise zu erschweren oder sogar völlig zu beseitigen.

Die Erfindung löst diese Aufgabe durch die Schritte des Verfahrensanspruchs 1 sowie durch die Merkmale des Vorrichtungsanspruchs 7.

Die Erfindung ist in einem digitalen Kommunikationsnetz, insbesondere dem ISDN-Netz, verwirklicht. Ein derartiges digitales Kommunikationsnetz umfaßt bekannterweise mehrere Vermittlungsstellen, wenigstens eine beim Teilnehmer installierte Netzabschlußeinrichtung, an die wenigstens eine Datenendeinrichtung, beispielsweise Telefongeräte, Personalcomputer oder Facsimilegeräte, anschaltbar ist. Eine ungewollte Benutzung einer Vermittlungsstelle durch einen Eindringling wird nun dadurch verhindert, daß bei jedem Inhaber eines Teilnehmeranschlusses wenigstens ein erstes Authentisierungs-Modul angeordnet ist, das einen Identitätsträger aufnehmen kann, daß darüber hinaus in der Vermittlungsstelle wenigstens ein zweites Authentisierungs-Modul angeordnet ist, das einen zweiten Identitätsträger aufnehmen kann, wobei die beiden Authentisierungs-Module Informationen mit einem teilnehmerspezifischen, kryptographischen Schlüssel zur einseitigen und/oder gegenseitigen Authentisierung ver- und/oder entschlüsseln und die Informationen untereinander austauschen können.

In jeder Vermittlungsstelle sind anschlußspezifische Baugruppen eingebaut, die jeweils das zweite Authentisierungs-Modul enthalten. Diese Ausführungsform ist jedoch teuer und aufwendig, da die Vermittlungsstellen selbst umgebaut werden müßten.

Ein kostengünstigerer Weg, der mit einem geringeren Aufwand erreichbar ist, besteht darin, ausgehend von bereits vorhandenen digitalen Vermittlungsstellen eine Zusatzeinrichtung zwischen die der Vermittlungsstelle zugeordneten Netzabschlußeinrichtungen und die Vermittlungsstelle zu schalten. In dieser Zusatzeinrichtung ist für jeden zugehörigen Teilnehmeranschluß das entsprechende zweite Authentisierungs-Modul angeordnet.

Das erste Authentisierungs-Modul eines bestimmten Anschlußinhabers ist zweckmäßigerweise in der dem Teilnehmeranschluß zugeordneten Netzabschlußeinrichtung selbst angeordnet. In diesem Fall genügt ein einziges Authentisierungs-Modul, auch wenn der Inhaber eines Teilnehmeranschlusses über einen S₀-Bus bis zu acht Datenendgeräte an die Netzabschlußeinrichtng angeschlossen hat. Es ist durchaus möglich, jedes Datenendgerät, das einer Netzabschlußeinrichtung zugeordnet ist, mit einem eigenen Authentisierungs-Modul und einem eigenen Identitätsträger auszurüsten. Eine weitere Alternative kann darin bestehen, zwischen jedes Datenendgerät und der zugehörigen Netzabschlußeinrichtung eine Sicherungs-Einrichtung anzuschließen, die das jeweilige Authentisierungs-Modul enthält. Es ist jedoch leicht einzusehen, daß die beiden letztgenannten Implementierungsmöglichkeiten aufwendig und teuer sind, da für jedes Datenendgerät sowohl ein eigenes Authentisierungs-Modul als auch ein anschlußspezifischer Identitätsträger erforderlich sind. Die zur Authentisierung des Teilnehmeranschlusses zwischen den beiden Authentisierungs-Modulen auszutauschenden Informationen enthalten zum einen die Adresse eines bestimmten Teilnehmeranschlusses, eine Befehlssequenz, die z.B. in der Aufforderung an das erste Authentisierungs-Modul besteht, die ankommenden Informationen zu verschlüsseln, und eine Zufallszahl. Handelt es sich bei dem digitalen Kommunikationsnetz um ein ISDN-Netz, so erfolgt der Austausch der zur Authentisierung dienenden Informationen zwischen dem ersten Authentisierungs-Modul und dem zweiten Authentisierungs-Modul über den D-Kanal des ISDN-Netzes. Jeder Identitätsträger kann einen individuellen, auf den Inhaber des Teilnehmeranschlusses bezogenen kryptografischen Schlüssel speichern. Der Identitätsträger kann eine Chipkarte sein, die vom Inhaber eines Teilnehmeranschlusses in das erste Authentisierungs-Modul und von einer Bedienperson des Netzbetreibers in das zweite Authentisierungs-Modul einführbar sind. Eine zweckmäßige Alternative betrifft ein Software-Modul als Identitätsträger, der austauschbar in das jeweilige Authentisierungs-Modul eingesetzt werden kann. Bei einer vorteilhaften Weiterbildung kann das erste Authentisierungs-Modul zusätzlich vertrauliche Verbindungsaufbau- und/oder Serviceinformationen verschlüsseln und das zweite, der Vermittlungsstelle zugeordnete Authentisierungs-Modul die so verschlüsselten Informationen wieder entschlüsseln.

Da die Verbindungsaufbau- und/oder Service-Informationen eine höhere Bitrate benötigen als die Authentisierungs-Informationen, ist es zweckmäßig, zu den ersten und zweiten Authentisierungs-Modulen jeweils ein separates kryptographisches Modul zu installieren, in dem Identitätsträger eingesetzt werden können, die ausschließlich die Verbindungsaufbau- und/oder Service-Informationen ver- und/oder entschlüsseln.

Die Erfindung wird nachstehend anhand der Ausführungsformen in Verbindung mit den beiliegenden Zeichnungen näher erläutert. Es zeigen:
- Fig. 1: in schematischer Weise einen Ausschnitt eines digitalen Kommunikationsnetzes, das den Verbindungsweg von einem Fernsprechapparat zu einer digitalen Vermittlungsstelle zeigt, in dem die Erfindung verwirklicht ist,
- Fig. 2: eine zweite Ausführungsform, bei der die erfindungsgemäßen Authentisierungs-Module auf der Seite der Vermittlungsstelle in einer Zusatzeinrichtung eingebaut sind,
- Fig. 3: ein detailliertes Blockschaltbild der Netzabschlußeinrichtung mit dem erfindungsgemäßen Authentisierungs-Modul und
- Fig. 4: ein detailliertes Blockschaltbild einer anschlußspezifischen Baugruppe der Vermittlungsstelle mit einem eingebauten Authentisierungs-Modul.
- Fig. 5: das Rahmenformat der ISDN-Bitströme.

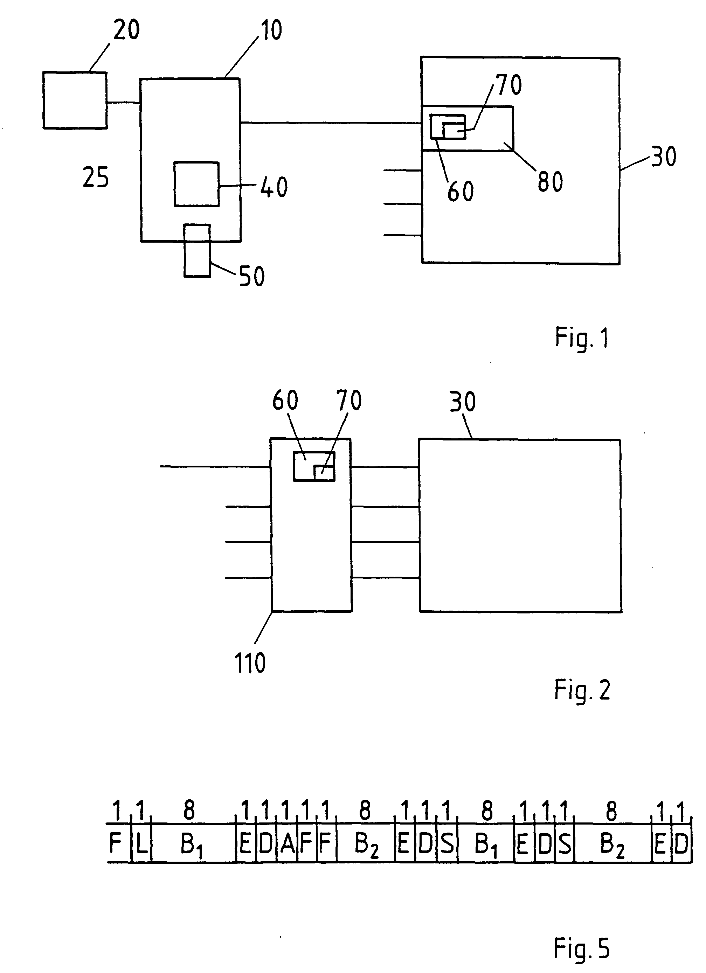

Fig. 1 zeigt in vereinfachter Darstellung einen Teil eines digitalen Kommunikationsnetzes, das für die nachfolgende beispielhafte Beschreibung ein ISDN-Netz sein soll. Teilnehmerseitig ist als Datenendeinrichtung ein Fernsprechapparat 20 dargestellt, der über einen S₀-Bus 25 mit einer Netzabschlußeinrichtung 10 verbunden ist. Die Netzabschlußeinrichtung 10, auch Net Terminator (NT) genannt, kann in dem Gebäude oder Raum eines Teilnehmer-Anschluß-Inhabers installiert sein. An den S₀-Bus 25 können bis zu acht Datenendeinrichtungen, wie z.B. weitere Fernsprechapparate 20, Facsimilegeräte oder Personalcomputer, angeschlossen werden. In dem erläuterten Beispiel ist ein erfindungsgemäßes Authentisierungs-Modul 40 in die Netzabschlußeinrichtung 10 eingebaut, in das ein Identitätsträger 50 eingesetzt sein kann. Bei dem Identitätsträger 50 kann es sich um eine Chipkarte oder um ein Software-Modul handeln. Das Authentisierungs-Modul 40 und der Identitätsträger 50 sind derart ausgelegt, daß sie Informationen zur Authentisierung eines bestimmten Teilnehmers mit einem teilnehmerspezifischen oder anschlußspezifischen Schlüssel verschlüsseln oder entschlüsseln können. Dieser Schlüssel kann in einem Speicherbaustein der Chipkarte des Anschlußinhabers abgelegt sein. Die Netzabschlußeinrichtung 10 ist ausgangsseitig in bekannter Weise über eine verdrillte Zweidraht-Leitung mit einer ihr zugewiesenen ISDN-Vermittlungseinrichtung 30 verbunden. Es ist selbstverständlich, daß ein ISDN-Netz mehrere Netzabschlußeinrichtungen 10 und mehrere Vermittlungssysteme 30 umfaßt, die über verdrillte Zweidraht-Leitungen untereinander verbunden sein können. In Zukunft werden die herkömmlichen Zweidraht-Leitungen beispielsweise durch Glasfaser-Kabel ergänzt und ersetzt.Die Vermittlungseinrichtung 30 enthält mehrere Baugruppen 80 (in Fig. 1 ist lediglich eine anschlußspezifische Baugruppe 80 dargestellt), die bestimmten Teilnehmeranschluß-Inhabern zugeordnet sind. Gemäß der ersten erfindungsgemäßen Ausführungsform ist ein Authentisierungs-Modul 60 in jeder anschlußspezifischen Baugruppe 80 angeordnet, in das eine teilnehmerbezogene Chipkarte oder ein anschlußspezifisches Software-Modul 70 im Bedarfsfall von einer Bedienperson eingesetzt wird. Es sei angenommen, daß der Identitätsträger 70 in der Vermittlungseinrichtung 30 ebenfalls den individuellen kryptographischen Schlüssel des Anschlußinhabers für den Fernsprechapparat 20 enthält. Der genaue Ablauf einer Authentisierung des Teilnehmers des Fernsprechapparates 20 gegenüber der Vermittlungseinrichtung 30 wird weiter unten noch genauer erläutert.

In Fig. 2 ist eine alternative Ausführungsform dargestellt, bei der eine Zusatzeinrichtung 110 zwischen die Netzabschlußeinrichtung 10 und die Vermittlungseinrichtung 30 geschaltet ist. Der besseren Übersichtlichkeit wegen zeigt Fig. 2 die Zusatzeinrichtung 110 nur mit dem eingebauten Authentisierungs-Modul 60. Normalerweise sind in der Zusatzeinrichtung 100 alle Authentisierungs-Module installiert, die den Teilnehmern oder Netzabschlußeinrichtungen zugeordnet sind, die allesamt von der Vermittlungsstelle 30 bedient werden. Die Anschlußleitungen sind hierzu in den Fig. 1 und 2 angedeutet. Wiederum können die Identitätsträger 70 als Chipkarte von außen von einer Bedienperson eingeführt werden, oder aber bereits bei der Implementierung als Software-Modul in das jeweilige Authentisierungs-Modul 60 eingesetzt werden. Die Zusatzeinrichtung 110 hat den Vorteil, daß bereits vorhandene Vermittlungsstellen des ISDN-Netzes weiterhin benutzt werden können, ohne zeitaufwendige, teure und komplizierte Änderungen an den Vermittlungssystemen vornehmen zu müssen, um eine Authentisierung beispielsweise des Teilnehmers des Fernsprechapparates 20 gegenüber der Vermittlungseinrichtung 30 durchführen zu können.

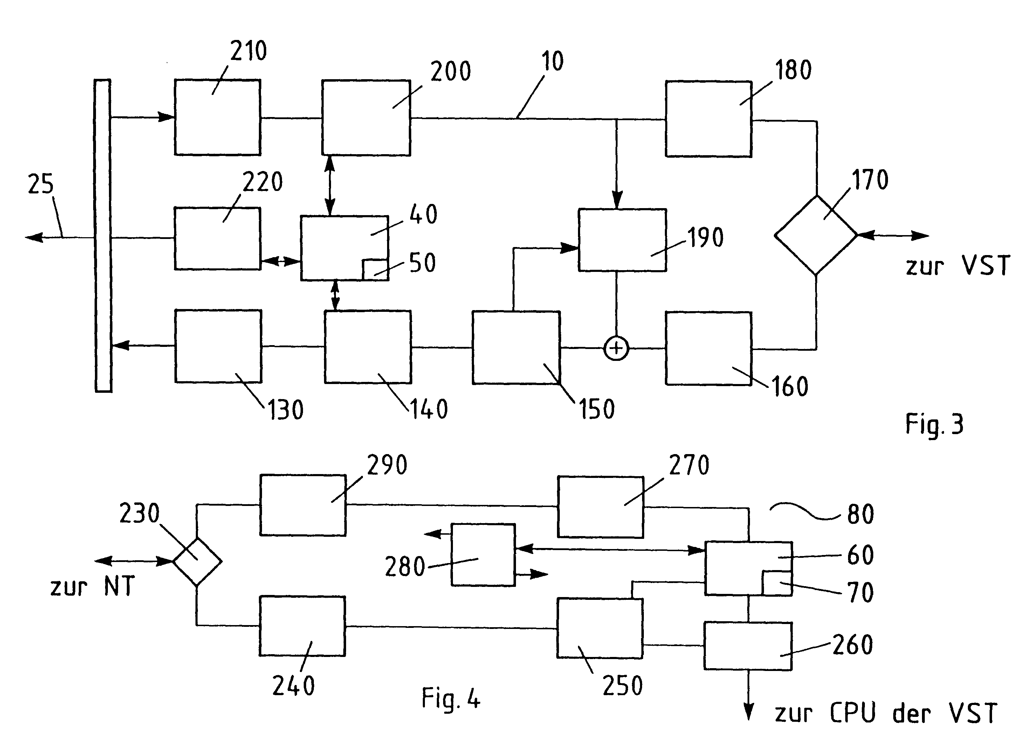

Fig. 3 zeigt ein vereinfachtes Blockschaltbild der bekannten Netzabschlußeinrichtung 10, in die das erfindungsgemäße Authentisierungs-Modul 40 zusammen mit dem Identitätsträger 50 installiert ist. Teilnehmerseitig besitzt die Netzabschlußeinrichtung 10 eine Anschlußeinheit für den S₀-Bus 25, an den bis zu acht Datenendeinrichtungen 20 anschließbar sind. Da der Aufbau und die Funktionsweise der Netzabschlußeinrichtung 10 allgemein bekannt ist, werden nachfolgend nur die wesentliche Baugruppen kurz erläutert. Grundsätzlich weist die Netzabschlußeinrichtung 10 einen Sendepfad und einen Empfangspfad auf. Der Sendepfad umfaßt einen Codierer 210, der den abgehenden Datenstrom nach bekannten Codierverfahren moduliert, einen Multiplexer 200, der die Aufgabe hat, die beiden B-Kanäle und den D-Kanal im Zeitmultiplexverfahren zu einem zusammenhängenden Datenstrom zusammenzusetzen. Ein entsprechendes Rahmenformat besteht aus 48 Bits pro 250 ms, wobei lediglich vier D-Kanalbits pro Rahmen vorgesehen sind. Mit anderen Worten werden über den D-Kanal 16 kBit/s übertragen. Wie nachfolgend noch erläutert wird, erfolgt die Authentisierung eines Teilnehmers gegenüber der Vermittlungseinrichtung 30 über diesen D-Kanal. Der Sendepfad verläuft danach nacheinander über einen Sender 180 zu einem Gabelumschalter 170, der den abgehenden Datenstrom auf eine Zweidrahtleitung gibt, die die Vermittlungsstelle 30 mit der Netzabschlußeinrichtung 10 verbindet. Ankommende Datenströme durchlaufen die Gabelschaltung 170, einen Empfänger 160 und eine Einrichtung 150, die den empfangenen Datenstrom entzerrt, verstärkt und aus diesem das Taktsignal rückgewinnt. Als nächstes durchläuft der Datenstrom einen Demultiplexer 140, der den Datenstrom wieder in die beiden B-Kanäle und den D-Kanal zerlegt. Der demultiplexierte Datenstrom durchläuft einen Decodierer 130 und wird anschließend entsprechend einer Zieladresse über den S₀-Bus 25 beispielsweise zu dem Fernsprechapparat 20 übertragen. Eine Echokompensation 190, die parallel zwischen den Sender 180 und den Empfänger 160 geschaltet ist, dient unter anderem dazu, abgehende Nachrichten, die über den Gabelumschalter 170 und den Empfänger 160 dem Empfangspfad zugeführt werden, zu kompensieren. Das Herzstück der Netzabschlußeinrichtung 10 ist eine Steuereinheit 220, die die Verwaltung und Steuerung der einzelnen Baugruppen miteinander steuert. Das erfindungsgemäße Authentisierungs-Modul 40 mit dem eingesetzten Identitätsträger 50 ist beispielsweise mit der Steuereinheit 220, dem Codierer 210, dem Multiplexer 200, dem Demultiplexer 140 und dem Decodierer 130 verbunden. Die Steuereinheit 220 hat ferner die Aufgabe, die Authentisierungseinrichtung, d.h. das Authentisierungs-Modul 40 und den Identitätsträger 50, je nach Situation zu aktivieren oder zu deaktivieren.

In Fig. 4 ist beispielsweise das vereinfachte Blockschaltbild einer teilnehmerspezifischen Baugruppe 80 dargestellt, die in der Vermittlungseinrichtung 30 installiert ist. Die anschlußspezifische Baugruppe 80 bildet im wesentlichen das Gegenstück zu der Netzabschlußeinrichtung 10. Ankommende Datennachrichten gelangen über die Zweidraht-Leitung zu einem Gabelumschalter 230 und durchlaufen anschließend einen Demultiplexer 240, einen Decoder 250 und einen D-Kanal-Händler 260. Der D-Kanal-Händler 260 versorgt eine zentrale Steuereinheit der Vermittlungseinrichtung 30 mit den entsprechenden Steuerinformationen. In umgekehrter Richtung laufen abgehende Nachrichten über einen Codierer 270, über einen Multiplexer 290 und über den Gabelumschalter 230 auf die Zweidraht-Leitung zur Netzabschlußeinrichtung 10. Auch in der anschlußspezifischen Baugruppe 80 übernimmt eine Steuereinheit 280 die Verwaltung und das Zusammenspiel der einzelnen Bauelemente. Erfindungsgemäß ist das Authentisierungs-Modul 60 mit einer von außen einführbaren Chipkarte oder einem eingesetzten Software-Modul 70 in der anschlußspezifischen Baugruppe 80 installiert. Die Authentisierungseinrichtung 60, 70, die das Authentisierungs-Modul 60 und den Identitätsträger 70 umfaßt, ist wiederum mit dem Codierer 270, dem Decoder 250, dem D-Kanalhändler 260 und der Steuereinheit 280 verbunden. Wie bereits erwähnt, kann die Authentisierungseinrichtung 60, 70 auch in der Zusatzeinrichtung 110 installiert sein, wie dies in Fig. 2 dargestellt ist.

Es ist zwar zweckmäßig, die Authentisierungseinrichtung 40, 50 (das Authentisierungs-Modul 40 und den Identitätsträger 50) in der Netzabschlußeinrichtung 10 selbst unterzubringen, da auf diese Weise unabhängig von der Anzahl der angeschlossenen Datenendeinrichtungen 20 lediglich eine einzige Authentisierungseinrichtung 40, 50 erforderlich ist. Allerdings ist es auch denkbar, die teilnehmerseitige Authentisierungseinrichtung 40, 50 in jeder Datenendeinrichtung 20 anzuordnen. Eine weitere Alternative besteht darin, zwischen die Netzabschlußeinrichtung 10 und jedes angeschlossene Datenendgerät 20 eine nicht dargestellte Sicherungs-Einrichtung vorzusehen, in der die Authentisierungseinrichtung 40, 50 implementiert ist. Die beiden letztgenannten Möglichkeiten führen aber zu dem wesentlichen Nachteil, daß ein Teilnehmer für jede Datenendeinrichtung 20, die er an seine Netzabschlußeinrichtung 10 anzuschließen wünscht, eine separate Authentisierungseinrichtung 40, 50 mitkaufen müßte. Aus wirtschaftlichen Gründen ist es zweckmäßig, Authentisierungseinrichtungen 40, 50, wie in Fig. 1 dargestellt, in der Netzabschlußeinrichtung 10 selbst zu installieren. Der Identitätsträger 50 kann in Form eines Software-Moduls von dem Netzbetreiber bei der Installation der Netzabschlußeinrichtung 10 bei dem Teilnehmer eingesetzt werden. Handelt es sich bei dem Identitätsträger 50 um eine Chipkarte, so kann der Teilnehmer diese Chipkarte, die seinen individuellen Teilnehmerschlüssel enthält, z.B. beim Netzbetreiber erwerben.

Es wird nunmehr detaillierter auf die Authentisierung des Teilnehmers des Fernsprechapparates 20 gegenüber der Vermittlungsstelle 30 eingegangen.

Es sei angenommen, daß eine teilnehmerseitige Authent sierungseinrichtung 40, 50 in der Netzabschlußeinrichtung 10 und eine zweite Authentisierungseinrichtung 60, 70 in der dem bestimmten Teilnehmer zugeordneten Baugruppe 80 in der Vermittlungsstelle 30 installiert sind. Gemäß der in Fig. 2 gezeigten Ausführungsform kann die Authentisierungs-Einrichtung 60, 70 auch in der Zusatzeinrichtung 110 installiert sein. Die nachfolgend beschriebenen Verfahren laufen für beide Ausführungsformen im wesentlichen in gleicher Weise ab.

Es sei nun der Fall angenommen, daß der Teilnehmer den Hörer seines Fernsprechapparates 20 abnimmt, um einen Verbindungswunsch anzukündigen. Daraufhin sendet der Fernsprechapparat 20 über die Netzabschlußeinrichtung 10 eine Verbindungsaufbau-Nachricht an die Vermittlungseinrichtung 30. Unter Ansprechen auf die Verbindungsaufbau-Nachricht schickt die Vermittlungseinrichtung 30 eine Verbindungsaufbau-Bestätigungsnachricht zur Netzabschlußeinrichtung 10 zurück. Zusätzlich werden Authentisierungs-Informationen von der Vermittlungseinrichtung 30 zur Netzabschlußeinrichtung 10 übertragen. Diese Authentisierungs-Informationen können Adreßdaten des Teilnehmers des Fernsprechapparates 20, Befehlsdaten und Informationsdaten enthalten. Die Befehlsdaten enthalten z.B. für die Authentisierungseinrichtung 40, 50 in der Netzabschlußeinrichtung 10 die Aufforderung "Sende empfangene Informationen verschlüsselt zurück". Die zur Authentisierung dienende Information kann beispielsweise eine Zufallszahl sein, die mindestens 8 Byte lang ist und beliebig viele Füllinformationen umfaßt. Die Steuereinheit 220 liest die empfangene Authentisierungs-Information, insbesondere die Befehlsdaten, und veranlaßt daraufhin die Authentisierungseinrichtung 40, 50 die zusammen mit der Adresse und den Befehlsdaten übertragenen Informationen mit dem teilnehmer- oder anschlußspezifischen Schlüssel zu verschlüsseln, und über den Multiplexer 200, den Sender 81, den Gabelumschalter 170 und die Zweidraht-Leitung zum Identitätsträger 70 der Vermittlungsstelle 30 zurückzusenden. Wie bereits erwähnt, werden die der Authentisierung dienenden Informationen in dem D-Kanal übertragen, der mit Hilfe des Demuliplexers 140 aus den empfangenen Daten herausgefiltert und dem Identitätsträger 50 zugeführt wird. Die verschlüsselten Informationen erreichen das Authentisierungs-Modul 60 in der teilnehmerspezifischen Baugruppe 80 der Vermittlungsstelle 30. Die Steuereinheit 280 aktiviert die Authentisierungs-Einrichtung 60, 70, um die verschlüsselte Information mit dem teilnehmerspezifischen Schlüssel, der dem Schlüssel auf dem Identitätsträger 50 der Netzabschlußeinrichtung 10 entspricht, zu entschlüsseln. Die Steuereinheit 280 oder die Authentisierungs-Einrichtung 60, 70 überprüft die entschlüsselte Information mit der zuvor abgesendeten Information. Stimmen die beiden Informationen überein, wird der D-Kanal-Händler 260 über die Steuereinheit 280 aktiviert und sendet eine Steuernachricht zur Zentraleinheit der Vermittlungsstelle 30, um ihr mitzuteilen, daß der, einen Verbindungsaufbau suchende Teilnehmer dazu auch berechtigt ist. Daraufhin veranlaßt die Vermittlungsstelle 30 die Netzabschlußeinrichtung 10 des Teilnehmers, Verbindungsaufbau- und Service-Informationen zu übertragen.

Eine vorteilhafte Weiterbildung sieht nun vor, die nach einer erfolgreichen Authentisierung des Teilnehmers zu übertragenden Verbindungsaufbau- und Service-Informationen ebenfalls in verschlüsselter Form beispielsweise im D-Kanal zur Vermittlungsstelle 30 zu übermitteln. Die Verschlüsselung der Verbindungsaufbau- und Serviceinformationen des Teilnehmers kann entweder die Authentisierungs-Einrichtung 40, 50 selbst oder eine zusätzliche Sicherungs-Einrichtung bestehend aus einem Sicherungs-Modul und einem Identitätsträger (nicht dargestellt) ausführen. In der Vermittlungsstelle oder in der Zusatzeinrichtung übernimmt die Authentisierungs-Einrichtung 60, 70 oder eine separate Sicherungs-Einrichtung bestehend aus einem Sicherungs-Modul und einem teilnehmerbezogenen Identitätstrtäger die Entschlüsselung der verschlüsselten Verbindungsaufbau- und/oder Service-Informationen. Dank der Kombination dieser beiden Verfahren wird die Gefahr wesentlich eingeschränkt, wenn nicht sogar gänzlich beseitigt, daß Eindringlinge sich unberechtigt auf die Verbindungsleitung zwischen der Netzabschlußeinrichtung 10 und der Vermittlungsstelle 30 aufschalten und teilnehmervertrauliche Nachrichten anzapfen können, um auf Kosten des Teilnehmers die Vermittlungsstelle in nicht authorisierter Weise zu benutzen.

Ein weiteres Verfahren zur Authentisierung sieht vor, den Teilnehmer gegenüber der Vermittlungseinrichtung 30 vor Beginn des Verbindungsaufbaus zu authentisieren. Der Teilnehmer nimmt den Hörer seines Fernsprechapparates 20 ab, woraufhin die Netzabschlußeinrichtung 10 eine Verbindungsaufbau-Nachricht zur Vermittlungsstelle 30 überträgt. Statt eine Verbindungsaufbau-Bestätigungsnachricht an die Netzabschlußeinrichtung 10 zurückzusenden, veranlaßt die Vermittlungseinrichtung 30 bzw. die Zusatzeinrichtung 110 die Übertragung einer unverschlüsselten Nachricht, bestehend aus der Zieladresse eines bestimmten Teilnehmeranschlusses, einer Befehlssequenz und der zu verschlüsselnden Information. Unter Ansprechen auf die Befehlssequenz aktiviert die Steuereinheit 220 in der Netzabschlußeinrichtung 10 die Authentisierungs-Einrichtung 40, 50, die daraufhin in die im D-Kanal übertragene Information mit dem teilnehmerspezifischen kryptographischen Schlüssel verschlüsselt und, wie oben bereits beschrieben, zum Authentisierungs-Modul 60 in der Vermittlungseinrichtung 30 zurückschickt. Wiederum aktiviert die Steuereinheit 280 der Vermittlungsstelle 30 die Authentisierungs-Einrichtung 60, 70, die verschlüsselte Information mit dem ihr bekannten, teilnehmerspezifischen Schlüssel zu entschlüsseln. Stimmt die unverschlüsselt übertragene Information mit der entschlüsselten Information überein, erhält die Zentraleinheit der Vermittlungsstelle 30 über den D-Kanal-Händler 260 die Information, daß der einen Verbindungsaufbau wünschende Teilnehmer dazu berechtigt ist, und veranlaßt die Vermittlungsstelle, Verbindungsaufbau-Bestätigungsnachricht an die Netzabschlußeinrichtung 10 zu senden. Der Teilnehmer ist nunmehr gegenüber der Vermittlungsstelle authentisiert und kann nunmehr die Verbindungsaufbau- und Service-Informationen zur Vermittlungsstelle übertragen.

Gemäß einem weiteren Verfahren sendet die Authentisierungs-Einrichtung 60, 70 auf der anschlußspezifischen Baugruppe 80 der Vermittlungseinrichtung 30 in vorbestimmten, einstellbaren Zeitabständen eine Information einschließlich einer Adresse und einer Befehlssequenz an die Netzabschlußeinrichtung 10. Die Steuereinheit 220 der Netzabschlußeinrichtung 10 interpretiert die Befehlssequenz. Nach der Interpretation aktiviert die Steuereinheit die Authentisierungs-Einrichtung 40, 50, die über den D-Kanal angekommene Information gegebenenfalls zu ergänzen, mit dem individuellen, teilnehmerspezifischen Schlüssel zu verschlüsseln und an das Authentisierungs-Modul 60 in der Vermittlungsstelle 30 zurückzusenden. Die Steuereinheit 280 in der teilnehmerspezifischen Baugruppe 80 aktiviert nunmehr das Authentisierungs-Modul 60, die verschlüsselte Empfangsinformation mit dem ihr bekannten, teilnehmerspezifischen Schlüssel zu entschlüsseln. Stellt die Authentisierungs-Einrichtung 60, 70 oder die Steuereinheit 280 fest, daß die zu vergleichenden Informationen nicht übereinstimmen und damit die Identitätsprüfung negativ ist, sendet sie über den D-Kanalhändler 260 eine Mitteilung an die Zentraleinheit der Vermittlungsstelle 30, keinen Verbindungsaufbau einzuleiten. Das soeben beschriebene Verfahren kann auch dazu benutzt werden, die Berechtigung eines Teilnehmers während einer laufenden Kommunikation zu überprüfen. Sollte sich einmal ein unberechtigter Eindringling auf die Verbindungsleitung zwischen der Netzabschlußeinrichtung 10 und der Vermittlungseinrichtung 30 aufgeschaltet haben, so wird spätestens nach dem vorbestimmten, einstellbaren Zeitintervall die Authentisierungs-Einrichtung 60, 70 feststellen, daß sich ein Eindringling in die Verbindung eingeschaltet hat. Daraufhin wird die Vermittlungsstelle 30 veranlaßt, die bestehende Verbindung zu trennen.

## Patentansprüche

1. Verfahren zur Authentisierung von Teilnehmern gegenüber einer oder mehreren Vermittlungsstellen (30) eines digitalen Kommunikationsnetzes mit wenigstens einer teilnehmerseitigen Netzabschlußeinrichtung (10), an die wenigstens eine Datenendeinrichtung (20) anschaltbar ist,
wenigstens einem ersten, bei einem Teilnehmer angeordneten Authentisierungs-Modul (40), das einen ersten, einen teilnehmerspezifischen, kryptografischen Schlüssel enthaltenden Identitätsträger (50) aufnimmt, und
wenigstens einem zweiten, in oder unmittelbar vor der Vermittlungsstelle (30) angeordneten Authentisierungs-Modul (60), das einen zweiten, den teilnehmerspezifischen, kryptografischen Schlüssel enthaltenden Identitätsträger (70) aufnimmt, mit folgenden Verfahrensschritten:
a) Übertragen einer Information vom zweiten Authentisierungs-Modul (60) zum ersten Authentisierungs-Modul (40),
b) Verschlüsseln der empfangenen Information im ersten Authentisierungs-Modul (40) mit Hilfe des teilnehmerspezifischen, kryptografischen Schlüssels und Übertragen der verschlüsselten Information zurück zum zweiten Authentisierungs-Modul (60),
c) Entschlüsseln der Information im zweiten Authentisierungs-Modul (60) mit Hilfe des teilnehmerspezifische, kryptografischen Schlüssels zur Authentisierung des Teilnehmers gegenüber der Vermittlungsstelle (30).

2. Verfahren zur Authentisierung nach Anspruch 1,
**dadurch gekennzeichnet,**
**daß** die Schritte a) bis c) vor Beginn des Verbindungsaufbaus durchgeführt werden, und
daß bei erfolgreicher Authentisierung des Teilnehmers die jeweilige Vermittlungsstelle veranlaßt wird, Verbindungsaufbau- und/oder Service-Informationen anzufordern.

3. Verfahren zur Authentisierung nach Anspruch 1,
**dadurch gekennzeichnet,**
**daß** die Vermittlungsstelle (30) nach einem Verbindungsaufbau ein Verbindungsaufbau-Bestätigungssignal und eine Information zur rufenden Datenendeinrichtung (20 sendet, und
daß danach die Schritte b) und c) durchgeführt werden.

4. Verfahren zur Authentisierung nach einem der Ansprüche 1 bis 3,
**dadurch gekennzeichnet,**
**daß** nach einem Verbindungsaufbau zwischen der Netzabschlußeinrichtung (10) und der Vermittlungsstelle (30) die Authentizität des Teilnehmers zyklisch überprüft wird.

5. Verfahren zur Authentisierung nach einem der Ansprüche 1 bis 4, **gekennzeichnet durch** folgende Verfahrensschritte: Übertragen einer Information vom ersten Authentisierungs-Modul (40) zum zweiten Authentisierungs-Modul (60), Verschlüsseln der empfangenen Information im zweiten Authentisierungs-Modul (60) mit Hilfe des teilnehmerspezifischen, kryptografischen Schlüssels und Übertragen der verschlüsselten Information zurück zum ersten Authentisierungs-Modul (40), Entschlüsseln der Information im ersten Authentisierungs-Modul (40) mit Hilfe des teilnehmerspezifische, kryptografischen Schlüssels zur Authentisierung der Vermittlungsstelle (30) gegenüber dem Teilnehmer.

6. Verfahren zur Authentisierung nach einem der Ansprüche 1 bis 5,
**dadurch gekennzeichnet,**
**daß** die zur Authentisierung dienenden Informationen über den D-Kanal eines ISDN-Netzes übertragen werden.

7. Vorrichtung zur Authentisierung von Teilnehmern gegenüber einer oder mehreren Vermittlungsstellen (30) eines digitalen Kommunikationsnetzes mit wenigstens einer teilnehmerseitigen Netzabschlußeinrichtung (10), an die wenigstens eine Datenendeinrichtung (20) anschaltbar ist,
**dadurch gekennzeichnet,**
**daß** bei jedem Teilnehmer wenigstens ein erstes
Authentisierungs-Modul (40) angeordnet ist, das einen ersten Identitätsträger (50) aufnimmt,
daß in oder unmittelbar vor der Vermittlungsstelle (30) wenigstens ein zweites Authentisierungs-Modul (60) angeordnet ist, das einen zweiten Identitätsträger (70) aufnimmt, wobei die Authentisierungs-Module (40, 60) eine Information mit einem individuellen, teilnehmerspezifischen Schlüssel zur einseitigen und/oder gegenseitigen Authentisierung ver- und/oder entschlüsseln und die Informationen untereinander austauschen können.

8. Vorrichtung zur Authentisierung nach Anspruch 7,
**dadurch gekennzeichnet,**
**daß** zwischen die der Vermittlungsstelle (30) zugeordneten Netzabschlußeinrichtungen (10) und die Vermittlungsstelle (30) eine Zusatzeinrichtung (110) geschaltet ist, in der das zweite Authentisierungs-Modul (60) angeordnet ist.

9. Vorrichtung zur Authentisierung von Teilnehmern nach Anspruch 7 oder 8,
**dadurch gekennzeichnet,**
**daß** in jeder an die Netzabschlußeinrichtung (10) anschaltbaren Datenendeinrichtung (20) das erste Authentisierungs-Modul (40) angeordnet ist.

10. Vorrichtung zur Authentisierung von Teilnehmern nach Anspruch 7 oder 8,
**dadurch gekennzeichnet,**
**daß** zwischen jeder Datenendeinrichtung (20) des Teilnehmers und der zugehörigen Netzabschlußeinrichtung (10) eine Sicherungs-Einrichtung geschaltet ist, die wenigstens ein erstes Authentisierungs-Modul (40) enthält.

11. Vorrichtung zur Authentisierung von Teilnehmern nach Anspruch 7 oder 8,
**dadurch gekennzeichnet,**
**daß** das erste Authentisierungs-Modul (40) in der Netzabschlußeinrichtung (10) angeordnet ist.

12. Vorrichtung zur Authentisierung von Teilnehmern nach einem der Ansprüche 7 bis 11,
**dadurch gekennzeichnet,**
**daß** die zwischen dem ersten und zweiten Authentisierungs-Modul (40, 60) auszutauschenden, der Authentisierung dienenden Informationen die Adresse eines Teilnehmeranschlusses, eine Befehlssequenz und eine Zufallszahl enthalten.

13. Vorrichtung zur Authentisierung von Teilnehmern nach einem der Ansprüche 7 bis 12,
**dadurch gekennzeichnet,**
**daß** das digitale Kommunikationsnetz ein ISDN-Netz ist und der Austausch der zur Authentisierung dienenden Informationen zwischen dem ersten Authentisierungs-Modul (40) und dem zweiten Authentisierungs-Modul (60) über den D-Kanal des ISDN-Netzes erfolgt.

14. Vorrichtung zur Authentisierung von Teilnehmern nach einem der Ansprüche 7 bis 13,
**dadurch gekennzeichnet,**
**daß** die Identitätsträger (50, 70) eine Chipkarte oder ein Software-Modul sind.

15. Vorrichtung zur Authentisierung von Teilnehmern nach einem der Ansprüche 7 bis 14,
**dadurch gekennzeichnet,**
**daß** das erste Authentisierungs-Modul (40) vertrauliche Verbindungsaufbau- und/oder Serviceinformationen verschlüsseln und das zweite Authentisierungs-Modul (60) die verschlüsselten Verbindungsaufbau- und/oder Serviceinformationen entschlüsseln kann.

16. Vorrichtung zur Authentisierung von Teilnehmern nach einem der Ansprüche 7 bis 14,
**dadurch gekennzeichnet,**
**daß** separat zu jedem ersten und zweiten
Authentisierungs-Modul (40, 60) ein Sicherungs-Modul installierbar ist, das einen Identitätsträger aufnehmen und die Verbindungsaufbau- und/oder Serviceinformation ver- bzw. entschlüsseln kann.

## Claims

1. Method for authenticating subscribers for one or more switching centres (30) in a digital communication network having
at least one subscriber-side network termination device (10), to which at least one data terminal (20) can be connected,
at least one first authentication module (40), which is disposed with a subscriber and holds a first identity medium (50), which contains a subscriber-specific, cryptographic key, and
at least one second authentication module (60), which is disposed in or immediately in front of the switching centre (30) and holds a second identity medium (70), which contains the subscriber-specific, cryptographic key,
having the following method steps:
a) an information item is transmitted from the second authentication module (60) to the first authentication module (40),
b) the received information item is encrypted in the first authentication module (40) using the subscriber-specific, cryptographic key, and the encrypted information item is transmitted back to the second authentication module (60),
c) the information item is decrypted in the second authentication module (60) using the subscriber-specific, cryptographic key in order to authenticate the subscriber for the switching centre (30).

2. Authentication method according to Claim 1,
**characterized**
**in that** steps a) to c) are carried out before the start of connection setup, and
in that, if authentication of the subscriber is successful, the respective switching centre is prompted to request connection setup information and/or service information.

3. Authentication method according to Claim 1,
**characterized**
**in that**, after a connection has been set up, the switching centre (30) sends a connection setup confirmation signal and an information item to the calling data terminal (20), and
in that, thereafter, steps b) and c) are carried out.

4. Authentication method according to one of Claims 1 to 3,
**characterized**
**in that**, after a connection has been set up between the network termination device (10) and the switching centre (30), the authenticity of the subscriber is checked cyclically.

5. Authentication method according to one of Claims 1 to 4, **characterized by** the following method steps:
an information item is transmitted from the first authentication module (40) to the second authentication module (60),
the received information item is encrypted in the second authentication module (60) using the subscriber-specific, cryptographic key, and the encrypted information item is transmitted back to the first authentication module (40),
the information item is decrypted in the first authentication module (40) using the subscriberspecific, cryptographic key in order to authenticate the switching centre (30) for the subscriber.

6. Authentication method according to one of Claims 1 to 5,
**characterized**
**in that** the information used for authentication is transmitted via the D channel of an ISDN network.

7. Apparatus for authenticating subscribers for one or more switching centres (30) in a digital communication network having
at least one subscriber-side network termination device (10), to which at least one data terminal (20) can be connected,
**characterized**
**in that** at least one first authentication module (40), which holds a first identity medium (50), is disposed with each subscriber,
in that at least one second authentication module (60), which holds a second identity medium (70), is disposed in or immediately in front of the switching centre (30), with the authentication modules (40, 60) being able to encrypt and/or decrypt an information item containing an individual, subscriber-specific key for the purpose of unilateral and/or reciprocal authentication and to interchange the information with one another.

8. Authentication apparatus according to Claim 7,
**characterized**
**in that** a supplementary device (110) in which the second authentication module (60) is disposed is connected in between the network termination devices (10) associated with the switching centre (30) and the switching centre (30).

9. Apparatus for authenticating subscribers according to Claim 7 or 8,
**characterized**
**in that** the first authentication module (40) is disposed in each data terminal (20) which can be connected to the network termination device (10).

10. Apparatus for authenticating subscribers according to Claim 7 or 8,
**characterized**
**in that** a security device which contains at least one first authentication module (40) is connected between each data terminal (20) of the subscriber and the associated network termination device (10).

11. Apparatus for authenticating subscribers according to Claim 7 or 8,
**characterized**
**in that** the first authentication module (40) is disposed in the network termination device (10).

12. Apparatus for authenticating subscribers according to one of Claims 7 to 11,
**characterized**
**in that** the information which is to be interchanged between the first and second authentication modules (40, 60) and is used for authentication contains the address of a subscriber line, a command sequence and a random number.

13. Apparatus for authenticating subscribers according to one of Claims 7 to 12,
**characterized**
**in that** the digital communication network is an ISDN network, and the information used for authentication is interchanged between the first authentication module (40) and the second authentication module (60) via the D channel of the ISDN network.

14. Apparatus for authenticating subscribers according to one of Claims 7 to 13,
**characterized**
**in that** the identity media (50, 70) are a smart card or a software module.

15. Apparatus for authenticating subscribers according to one of Claims 7 to 14,
**characterized**
**in that** the first authentication module (40) is able to encrypt confidential connection setup and/or service information, and the second authentication module (60) is able to decrypt the encrypted connection setup and/or service information.

16. Apparatus for authenticating subscribers according to one of Claims 7 to 14,
**characterized**
**in that** a security module which is able to hold an identity medium and to encrypt and decrypt the connection setup and/or service information can be installed separately from each first and second authentication module (40, 60).

## Revendications

1. Procédé d'authentification d'abonnés vis-à-vis d'un ou de plusieurs centraux de communication (30) d'un réseau de communication numérique, avec au moins un dispositif (10) de raccordement au réseau auquel au moins un terminal de données (20) peut être raccordé, au moins un premier module d'authentification (40) installé chez un abonné, qui reçoit un premier support d'identité (50) contenant une clé cryptographique spécifique à l'abonné,
et
au moins un deuxième module d'authentification (60) installé dans le central de communication (30) ou immédiatement avant ce dernier, qui reçoit un deuxième support d'identité (70) contenant la clé cryptographique spécifique à l'abonné,
comportant les étapes de procédé suivantes :
a) transfert d'une information du deuxième module d'authentification (60) au premier module d'authentification (40),
b) cryptage de l'information reçue dans le premier module d'authentification (40) au moyen de la clé cryptographique spécifique à l'abonné et renvoi de l'information cryptée au deuxième module d'authentification (60),
c) décryptage de l'information dans le deuxième module d'authentification (60) à l'aide de la clé cryptographique spécifique à l'abonné, pour authentifier l'abonné vis-à-vis du central de communication (30).

2. Procédé d'authentification selon la revendication 1, **caractérisé en ce que** les étapes a) à
c) sont exécutées avant le début de l'établissement de la liaison, et en ce que, lorsque l'authentification de l'abonné s'est déroulée avec succès, le central de communication concerné est autorisé à demander des informations d'établissement de liaison et/ou de service.

3. Procédé d'authentification selon la revendication 1, **caractérisé en ce qu'**après l'établissement d'une liaison, le central de communication (30) envoie un signal d'activation de l'établissement de la liaison et une information au terminal de données (20) appelant, et en ce que les étapes b) etc) sont exécutées ensuite.

4. Procédé d'authentification selon l'une des revendications 1 à 3, **caractérisé en ce qu'**après l'établissement d'une liaison entre le dispositif (10) de raccordement au réseau et le central de communication (30), l'authenticité de l'abonné est vérifiée cycliquement.

5. Procédé d'authentification selon l'une des revendications 1 à 4, **caractérisé par** les étapes de procédé suivantes :
transmission d'une information du premier module d'authentification (40) au deuxième module d'authentification (60),
cryptage de l'information reçue dans le deuxième module d'authentification (60) à l'aide de la clé cryptographique spécifique à l'abonné et renvoi de l'information cryptée au premier module d'authentification (40),
décryptage de l'information dans le premier module d'authentification (40) à l'aide de la clé cryptographique spécifique à l'abonné, pour l'authentification du central de communication (30) vis-à-vis de l'abonné.

6. Procédé d'authentification selon l'une des revendications 1 à 5, **caractérisé en ce que** les informations servant à l'authentification sont transmises par le canal D d'un réseau RNIS.

7. Dispositif d'authentification d'abonnés vis-à-vis d'un ou de plusieurs centraux de communication (30) d'un réseau de communication numérique comportant au moins un dispositif (10) de raccordement au réseau du côté de l'abonné, auquel au moins un terminal de données (20) peut être raccordé, **caractérisé en ce qu'**un premier module d'authentification (40) qui reçoit un premier support d'identité (50) est installé chéz chaque abonné, en ce que dans ou immédiatement avant le central de communication (30) est installé au moins un deuxième module d'identification (60) qui reçoit un deuxième support d'identité (70), et les modules d'authentification (40, 60) cryptent et/ou décryptent une information à l'aide d'une clé individuelle spécifique à l'abonné en vue d'une authentification unilatérale et/ou bilatérale, et peuvent échanger les informations entre eux.

8. Dispositif d'authentification selon la revendication 7, **caractérisé qu'**un dispositif supplémentaire (110) dans lequel est installé le deuxième module d'authentification (60) est raccordé entre les dispositifs (10) de raccordement au réseau associés aux centraux de communication (30) et les centraux de communication (30).

9. Dispositif d'authentification d'abonnés selon la revendication 7 ou 8, **caractérisé en ce que** le premier module d'authentification (40) est installé dans chaque terminal de données (20) apte à être raccordé au dispositif de raccordement au réseau (10).

10. Dispositif d'authentification d'abonnés selon la revendication 7 ou 8, **caractérisé en ce qu'**un dispositif de protection qui contient au moins un premier module d'authentification (40) est raccordé entre chaque terminal de données (20) de l'abonné et le dispositif (10) de raccordement au réseau associé.

11. Dispositif d'authentification d'abonnés selon la revendication 7 ou 8, **caractérisé en ce que** le premier module d'authentification (40) est installé dans le dispositif (10) de raccordement au réseau.

12. Dispositif d'authentification d'abonnés selon l'une des revendications 7 à 11, **caractérisé en ce que** les informations à échanger entre le premier et le deuxième module d'authentification (40, 60) et servant à l'authentification contiennent l'adresse du raccordement d'un abonné, une séquence de commande et un nombre aléatoire.

13. Dispositif d'authentification d'abonnés selon l'une des revendications 7 à 12, **caractérisé en ce que** le réseau de communication numérique est un réseau RNIS et les échanges des informations servant à l'authentification entre le premier module d'authentification (40) et le deuxième module d'authentification (60) s'effectuent sur le canal D du réseau RNIS.

14. Dispositif d'authentification d'abonnés selon l'une des revendications 7 à 13, **caractérisé en ce que** les supports d'identité (50, 70) sont une carte à puce ou un module logiciel.

15. Dispositif d'authentification d'abonnés selon l'une des revendications 7 à 14, **caractérisé en ce que** le premier module d'authentification (40) peut crypter des informations confidentielles d'établissement de liaison et/ou de service, et le deuxième module d'authentification (60) peut décrypter les informations cryptées d'établissement de liaison et/ou de service.

16. Dispositif d'authentification d'abonnés selon l'une des revendications 7 à 14, **caractérisé en ce qu'**un module de sécurité, qui peut recevoir un support d'identité et crypter ou décrypter les informations d'établissement de liaison et/ou de service, peut être installé séparément du premier et du deuxième module d'authentification (40, 60).
